# NEUE EUROPÄISCHE PATENTSCHRIFT

(11) **EP 0 180 953 B2**
(45) Veröffentlichungstag und Bekanntmachung des Hinweises auf die Entscheidung über den Einspruch: **09.08.1995**
(45) Hinweis auf die Patenterteilung: 18.03.1992
(21) Anmeldenummer: 85114015.2
(22) Anmeldetag: 04.11.1985
(51) Int. Cl.: C21D 1/76, C01B 3/04, C01B 3/22, C01B 3/38, B01J 7/00

(54) **Verfahren und Vorrichtung zum Herstellen einer Schutzgasatmosphäre**
Method and device for producing a protective atmosphere
Procédé et dispositif pour la production d'une atmosphère protectrice

(30) Priorität: 08.11.1984 DE 3440876
(43) Veröffentlichungstag der Anmeldung: 14.05.1986
(60) Teilanmeldung: 90124447.5
(73) Patentinhaber: Linde Aktiengesellschaft, 65189 Wiesbaden (DE)
(72) Erfinder: Strigl, Reinhard, Dipl.-Ing., D-8000 München 50 (DE); Veranneman, Georg, Dipl.-Ing., D-8023 Höllriegelskreuth (DE); Majerus, Hubert, Dipl.-Ing., D-8000 München 80 (DE)
(74) Vertreter: Schaefer, Gerhard, Dr.

(56) Entgegenhaltungen:
- EP-A- 0 096 104
- EP-A- 0 106 961
- DE-A- 2 758 024
- JP-A-59 162 941
- JP-A-59 162 941
- JP-B- 6 119 298
- US-A- 4 249 965

## Beschreibung

Die Erfindung betrifft ein Verfahren sowie Einrichtungen zur Herstellung einer Wasserstoff, Kohlenmonoxid und gegebenenfalls Stickstoff enthaltenden Atmosphäre oder auch einer Atmosphäre, die nur Stickstoff und Wasserstoff enthält, wobei die Atmosphäre durch katalytische Spaltung eines Einsatzfluids durch Kontakt mit einem Katalysator erzeugt wird und das gebildete Atmosphärengas dann einem Einsatzraum zugeführt wird, dessen Atmosphäre sich auf einer geeigneten Temperatur zur Behandlung von Einsatzgut befindet, und wobei der Katalysator in wärmeleitendem Kontakt mit dieser Atmosphäre im Einsatzraum steht.

Schutzgase, die Kohlenmonoxid und/oder Stickstoff sowie Wasserstoff enthalten, werden für eine Vielzahl von Prozessen benötigt. Zur Wärmebehandlung von Metallen ist es z.B. unter anderem bekannt, als Schutzgas ein in einem Generator durch Verbrennen eines Kohlenwasserstoffes hergestelltes Gas, das sogenannte Exogas zu verwenden. Dieses Gas weist jedoch einige Nachteile auf, beispielsweise beim Rekristallisationsglühen von Halbzeugen aus Stahl, Kupfer oder Messing, da es entkohlend und leicht oxidierend wirkt. Diese Nachteile werden vermieden, wenn als Schutzgas eine Mischung aus Stickstoff und Methanolspaltgas verwendet wird. Zu dessen Herstellung wird Methanol in Spaltanlagen, die außerhalb des Ofens angeordnet sind, gespalten. Es handelt sich dabei um Hochtemperaturspaltanlagen, in denen das Methanol auf Temperaturen erhitzt wird, die einen thermischen Zerfall des Methanols bewirken. Es sind jedoch auch Niedertemperaturspaltanlagen für Methanol bekannt, in denen das Methanol katalytisch in Kohlenmonoxid und Wasserstoff gespalten wird. Da Methanolspaltgas meist nur bei Temperaturen unter ca 1170 K (900°C) benötigt wird, sind die besagten Spaltanlagen oft unumgänglich.

Bei höheren Temperaturen kann Methanol direkt (in flüssigem Zustand) in den Einsatzraum eingespeist werden.
So ist es z.B. bekannt, das Einsatzfluid einem Wirbelbettofen direkt zuzuführen. Andrerseits ist auch bekannt, die Spaltung in einem Mantelstrahlrohr durchzuführen, das sich innerhalb eines Wärmebehandlungsofens befindet.

So ist beispielsweise aus der DE-OS 27 58 024 eine mantelstrahlrohrartige Einrichtung zur Erzeugung von Schutzgas bekannt, die unmittelbar im Ofenraum anzuordnen ist und die in etwa einen doppelrohrartigen Aufbau mit innenliegendem, ringförmigem Hohlraum und zentral angeorneter Beheizungsmöglichkeit aufweist. Nach außen ist diese Einrichtung mit einer Isolierung umgeben, die teilweise den Wärmezutritt vom Ofenraum her verhindert und ein ausgeglichenes Temperaturniveau innerhalb der Einrichtung schafft. Das Einsatzfluid, z.B. Gas (Erdgas, Propan) in Mischung mit Luft, wird nun zur Schutzgaserzeugung dem besagten Ringhohlraum zugeführt, darin erfolgt die Umsetzung dieser Medien in ein Schutzgas, das dann in den Ofenraum eingeleitet wird. In einer Hauptausgestaltungsvariante sind bei dieser Schutzgaserzeugungseinrichtung außerdem in dem beschriebenen Ringraum zusätzlich Katalysatorschichten angeordnet, die eine effizientere und ökonomischere Umsetzung der Ausgangsmedien ermöglichen. Nähere Angaben zu den Katalysatorschichten sind jedoch nicht entnehmbar.

Aus der JP-A-106 961 ist ferner ebenfalls eine Anlage und mithin auch ein Verfahren zur Herstellung einer Wasserstoff, Kohlenmonoxid und Stickstoff enthaltenden Atmosphäre bekannt, bei dem die Atmosphäre auch durch Spaltung eines Einsatzfluids durch Kontakt mit einem in einem Ofen angeordneten Katalysator erzeugt wird. Das so gebildete Atmosphärengas wird wieder direkt dem Innenraum des Ofens zugeführt, wobei sich dieser Einsatzraum auf einer geeigneten Temperatur zur Behandlung von Einsatzgut befindet. Dabei wird ferner eine nicht näher definierte Vorwärmung des Einsatzfluids vor dem Eintritt in den Katalysator durchgeführt und optionsweise auch ein Edelmetallkatalysator eingesetzt. Gemäß dieser Druckschrift wird weiter vorgeschlagen, den Katalysatoreinsatz mittels elektrischer Heizelemente auf eine geeignete Betriebstemperatur einzuregeln.

Die bekannten Verfahren weisen also den Nachteil auf, daß sie entweder nur für spezielle Anwendungsfälle geeignet sind oder relativ kompliziert oder unwirtschaftlich sind.

Zum Beispiel ist die Herstellung eines Schutzgases durch Spaltung eines Einsatzfluides in einem beheizten Mantelstrahlrohr zwar ein wirtschaftliches Verfahren, jedoch muß dieses Mantelstrahlrohr aus der Regelung für die Ofenheizung herausgenommen und gesondert geregelt werden. Außerdem besteht die Gefahr, daß an kälteren Stellen des als Spaltrohr wirkenden Mantelstrahlrohres Ruß ausfällt oder korrosive Zwischenprodukte, z.B. Formaldehyd, entstehen.

Der Erfindung liegt daher die Aufgabe zugrunde, ein möglichst mängelfreies. wirtschaftliches und trotzdem möglichst einfaches und universell einsetzbares Verfahren der eingangs geschilderten Art sowie eine zur Durchführung des Verfahrens geeignete Vorrichtung anzugeben.

Diese Aufgabe wird erfindungsgemäß durch die Merkmale des Anspruchs 1 und des Anspruchs 21 gelöst. Bevorzugte Ausführungsformen sind inden Ansprüchen 2 bis 20 und 22 bis 24 angegeben.

Unter Katalysator wird hier im allgemeinen eine aus einem Gehäuse, einem Katalysatorträger und der eigentlichen, in dünner Schicht auf den Katalysatorträger aufgebrachten Katalysatorsubstanz bestehende Einrichtung verstanden.

Nach einer bevorzugten Ausgestaltung der Erfindung wird die Temperatur des Katalysators in einem Temperaturbereich gehalten, in dem eine maximale Menge des Einsatzfluids katalytisch in die Schutzgaskomponenten Wasserstoff und Kohlenmonoxid bzw. Stickstoff gespalten wird. Auf diese Weise kann praktisch das gesamte Einsatzfluid in die gewünschten Schutzgaskomponenten zerlegt werden. Wird beispielsweise Methanol als Einsatzfluid verwendet und über einen Katalysator der Edelmetallreihe geführt, so wird das Methanol nur in einem zwischen 573 K (300°C) und 613 K (340°C) liegenden Temperaturbereich ideal in Kohlenmonoxid und Wasserstoff gespalten. Dagegen entstehen bei Temperaturen im Bereich zwischen 613 K (340°C) und 1073 K (800°C) in zunehmendem Maß unerwünschte Komponenten wie Kohlendioxid, Methan und Ruß. So auch bei einer ungleichmäßigen Temperaturverteilung, beispielsweise durch einseitige Erwärmung über das Gehäuse.

Daher wird - insbesondere zur Spaltung von Methanol-ein Edelmetallkatalysator in einem Temperaturbereich zwischen 573 K (300°C) und 613 K (340°C) eingesetzt.

In einer besonders vorteilhaften Ausgestaltung der Erfindung ist der Katalysator ein Autoabgaskatalysator.

Bei einem Autoabgaskatalysator ist der Katalysatorträger ein aus zahlreichen sehr kleinen Waben bestehender Keramikkörper, der in ein Gehäuse aus hitzebeständigem Material eingebaut ist. Als Katalysatorsubstanz sind Edelmetalle wie Platin oder Palladium verwendet. Derartige Autoabgaskatalysatoren besitzen nun im Vergleich zu marktüblichen Katalysatoren eine wesentlich größere Kontaktfläche und zeichnen sich durch eine hohe Gasdurchlässigkeit aus. Von besonderem Vorteil ist jedoch, das Autoabgaskatalysatoren relativ billige Massenartikel sind. Da der Keramikkörper in ein Gehäuse aus hitzebeständigem Material eingeschweißt ist, kann ein Autoabgaskatalysator direkt und ohne großen Aufwand höheren Temperaturen. z.B. den in Öfen zur Wärmebehandlung von Metallen herrschenden Temperaturen, ausgesetzt werden. Reicht die Kontaktflache eines Autoabgaskatalysators nicht aus, so können zwei oder auch mehrere Autoabgaskatalysatoren in Serie geschaltet werden. Die Verbindung zwischen den einzelnen Autoabgaskatalysatoren kann durch eine einfache Schraubverbindung erfolgen.

Wie bereits erläutert wurde, verläuft die katalytische Spaltung eines Einsatzfluides in einem bestimmten Temperaturbereich ideal. Erfindungsgemäß wird der Katalysator in diesem Temperaturbereich gehalten. Um keine ungleichmäßige Temperaturverteilung innerhalb des Katalysators zu verursachen hat es sich in einer vorteilhaften Variante der Erfindung als zweckmäßig erwiesen, das Einsatzfluid auf eine Temperatur zu erhitzen, die in dem Temperaturbereich liegt, innerhalb dessen der Katalysator gehalten wird.

In vielen Fällen wird eine aus Stickstoff und den katalytisch gespaltenen Komponenten eines Einsatzfluids bestehende Schutzgasatmosphäre verwendet. Daher kann dem Einsatzfluid nach einer weiteren Ausgestaltung der Erfindung vorteilhafterweise ein Inertgas wie Stickstoff zugemischt werden. Es hat sich dabei als zweckmäßig erwiesen, das Inertgas vor dem Vermischen zu erwärmen, vorteilhafterweise durch indirekten Wärmetausch mit dem Abgas desselben oder eines anderen Einsatzraumes.

Dabei wird das Inertgas und/oder das Einsatzfluid zweckmäßigerweise so erwärmt, daß das Einsatzfluid und/oder das Inertgas auf eine Temperatur erhitzt wird bzw. werden, bei welcher die Temperatur des Gemisches aus Inertgas und Einsatzfluid wiederum in dem Temperaturbereich liegt, innerhalb dessen der Katalysator gehalten wird.

In einer bevorzugten Ausgestaltung der Erfindung wird aus dem Einsatzraum heißes Gas entnommen, mit dem Einsatzfluid vermischt und das Gemisch über den Edelmetallkatalysator in den Ofen geleitet. Auf diese Weise kann eine besonders gleichmäßige Temperaturverteilung im Katalysator und damit eine günstigere Aufspaltung bewirkt werden. Bei der katalytischen Spaltung organischer Substanzen wie Methanol besteht keine Gefahr der Rußbildung. Zweckmäßig ist dabei auch, daß flüssige Einsatzfluide nicht vorverdampft werden müssen. Durch die Absaugung und wiedereinspeisung von Gas aus dem Einsatzraum wird vorteilhafterweise eine Zirkulation, die insbesondere quer zur Einlaufrichtung bzw. Auslaufrichtung des Einsatzgutes gerichtet sein kann, erzielt. Dabei hat es sich als vorteilhaft erwiesen, das Gas aus dem Einsatzraum mittels eines Stickstoffstromes über einen Injektor aus dem Ofen abzuziehen.

Erfindungsgemäß ist es wesentlich, die Temperatur des Katalysators in einem bestimmten Temperaturbereich zu halten. Erfindungsgemäß wird zu diesem Zweck die Temperatur des Katalysators gemessen beispielsweise über einen Meßfühler wie ein Thermoelement, das im Katalysatorgehäuse eingebaut ist. Überschreitet der Meßwert einen Sollwert, so werden Maßnahmen gemäß Anspruch 1 ergriffen, die sicherstellen, daß die Temperatur innerhalb des gewünschten Bereiches bleibt. Ferner werden die in Anspruch 10 angegebenen Maßnahmen ergriffen.

Grundsätzlich ist es zwar möglich, die Temperatur des Katalysators manuell zu regeln Besonders vorteilhaft ist jedoch eine automatische Regelung.

Grundsätzlich eignet sich zur erfindungsgemäßen Herstellung einer CO + H₂-haltigen Atmosphäre jede organische Verbindung, die katalytisch in Kohlenmonoxid und Wasserstoff gespalten werden kann. Bevorzugt wird jedoch eine organische Flüssigkeit - wegen der Verfügbarkeit und relativ geringen Herstellungskosten insbesondere Methanol - verwendet. Dabei hat es sich als zweckmäßig erwiesen, die organische Flüssigkeit bzw. das Methanol vor dem Einleiten in den Katalysator zu verdampfen und gegebenenfalls zu überhitzen.

In einer vorteilhaften weiteren Variante der Erfindung wird der organischen Flüssigkeit Wasser zugemischt und das Gemisch über den Edelmetallkatalysator geleitet, der auf einem Temperaturniveau im Bereich zwischen 623 K(350°C) und 1123 K (850°C) gehalten wird. Auf diese Weise kann ein kostengünstiges Schutzgas (sogenanntes Exogas) hergestellt werden, das zum Nitrokarburieren, zum Tempern von Gußeisen oder zum Entkohlen verwendet werden kann.

Wird der organischen Flüssigkeit Stickstoff zugemischt, so wird nach einer vorteilhaften Variante der Erfindung das Verhältnis der organischen Flüssigkeitsmenge zur Stickstoffmenge so gewählt, daß sich im Einsatzraum ein Kohlenmonoxidgehalt zwischen 1 Vol.% und 30 Vol% einstellt.

Zur Herstellung einer aus Stickstoff und Wasserstoff bestehenden Schutzgasatmosphäre kann erfindungsgemäß Ammoniak, das wiederum bei geeigneten Temperaturen dem Edelmetallkatalysator zugeführt wird, verwendet werden. Das erfindungsgemäße Verfahren ist so zum Beispiel zur Herstellung der Schutzgasatmosphäre für das Glühen von Rohren in Rollenherddurchlauföfen geeignet. Dabei kann beispielsweise ein Autoabgaskatalysator - gegebenenfalls auch zwei oder mehrere Autoabgaskatalysatoren - anstelle eines Strahlrohres in den entsprechenden Kanal eingesetzt werden.

Es muß aber nicht unbedingt ein Strahlrohr gezogen werden, das Schutzgas kann auf die erfindungsgemäße Weise auch an anderen Stellen des Einsatzraumes, an denen kein Temperatureinbruch auftritt, erzeugt werden. Das Verfahren ist auch in anderen Einsatzräumen als bei Rollenherdöfen, wie z.B. in Kammeröfen, Topföfen, Drehtrommelöfen. Drehherdöfen und Haubenöfen z.B. zum Glühen von Blechcoils, einsetzbar.

In einer anderen vorteilhaften Variante der Erfindung wird als Einsatzfluid ein Gemisch aus Erdgas und Luft verwendet. Dabei hat sich z.B. bei einer Gesamtschutzgasmenge von rund 170 m³/h ein Erdgasanteil von ca. 3 m³/h und ein Luftanteil von ca. 7.2 m³/h (Rest Stickstoff) besonders bewährt. Die Katalysatortemperatur ist in diesem Fall auf ca. 1193 K (920°C) einzustellen.

Nach einer weiteren vorteilhaften Variante der Erfindung wird der Katalysator zusätzlich durch das abgefackelte Abgas aus einem anderen Ofen (z.B. aus einem Topfofen oder einem Mehrzweckkammerofen) beheizt.

Eine Wärmebehandlungseinrichtung, die zur Durchführung des erfindungsgemäßen Verfahrens geeignet ist, besitzt einen mit Katalysatormasse gefüllten, aus wärmeleitendem Material bestehenden Behälter, der innerhalb des Einsatzraumes des Wärmebehandlungsofen angeordnet ist, wobei der Behälter wenigstens eine in den Einsatzraum mündende Öffnung besitzt und in den Behälter eine Zufuhrleitung für das Einsatzfluid mündet.

Das kennzeichnende Merkmal der Einrichtung besteht darin, daß es sich bei der angewendeten Katalysatormasse um eine edelmetallische Katalysatormasse handelt.

In einer vorteilhatten Ausgestaltung ist der Katalysator-Behälter im wesentlichen innerhalb eines die Wand des Einsatzraumes der Einrichtung durchsetzenden Kanals mit Abstand zur Kanalwand angeordnet.

Durch die Wand des Einsatzraumes wird der Katalysator wenigstens teilweise gegen den Innenraum abgeschirmt, so daß die Temperatur des Katalysators durch eine entsprechende Positionierung des Katalysators innerhalb des Kanals beeinflußt werden kann.

In den zwischen Kanalwand und Katalysatorgehäuse gebildeten Raum (im Falle eines zylindrischen Kanals und eines zylindrischen Katalysatorgehäuses ist dieser Raum ein Ringraum) kann nach einer bevorzugten weiteren Ausgestaltung der Erfindung eine Leitung für die Zufuhr eines Kühlfluids von außerhalb des Einsatzraumes münden. Dies dient zur Kühlung des Katalysators beispielsweise mit Stickstoff. Über die zeitlich strömende Kühlmittelmenge kann die Temperatur des Katalysators innerhalb des gewünschten Temperaturbereichs gehalten werden.

Weitere vorteilhafte Ausgestaltungen einer erfindungsgemäßen Vorrichtung sind in den Ansprüchen 24 und 25 sowie 26 bis 31 angegeben.

Die Erfindung soll nun anhand von Ausführungsbeispielen weiter erläutert werden.

In den Figuren 1 und 2 sind zwei Varianten der Erfindung dargestellt. Übereinstimmende Bauteile wurden mit denselben Bezugsziffern versehen.

Ein Einsatzraum einer entsprechenden Wärmebehandlungseinrichtung, im Ausführungsbeispiel der Innenraum 13 eines Rollenherddurchlaufofens, wird von einer Wand 16 begrenzt. In den Figuren sind nur kleine Ausschnitte des Ofeninnenraumes 13 und der Wand 16 dargestellt. Von der Wand 16 ist ein Schnitt durch einen Bereich dargestellt, in dem ein Strahlrohr innerhalb eines Kanals 17 (Strahlrohrbefestigung) angeordnet war. Dieses Strahlrohr ist gezogen und in den Kanal 17 ein z.B. aus zwei Autoabgaskatalysatoren 1a und 1b bestehendes System eingeführt worden. Mittels Fanschen 3, 4 wird der Ofeninnenraum gegenüber der Außenatmosphäre abgedichtet. Die beiden Autoabgaskatalysatoren 1a und 1b, die z.B. Platin als Katalysatorsubstanz enthalten, sind mittels Schrauben aneinander befestigt und so angeordnet, daß das Katalysatorgehäuse mit dem koaxial dazu verlaufenden Kanal 17 einen ringförmigen Raum 22 bildet. Der Innenraum der Autoabgaskatalysatoren, in dem sich die eigentliche Katalysatorsubstanz befindet, ist an eine Zufuhrleitung 15, die den Flansch 4 durchsetzt, angeschlossen. Die Mündung,aus der das Schutzgas aus dem Autoabgeskatalysator austritt, trägt das Bezugszeichen 14. In den Ringraum 22 mündet eine Leitung 2, über die Stickstoff zur Kühlung der Katalysatorgehäuse eingeleitet werden kann.

An dem am weitesten innerhalb des Ofens angeordneten Katalysator ist ein Temperaturmeßfühler, im Ausführungsbeispiel ein Thermoelement 18 angeordnet, das außerhalb des Ofens an eine Temperaturanzeige 11 oder einen Temperaturregler 10 angeschlossen ist.

Gemäß Figur 1 mündet in die Zufuhrleitung 15 über eine nicht näher dargestellte Mischvorrichtung eine Zufuhrleitung für Methanol und für Stickstoff 19. Mit 12 ist eine Heizvorrichtung bezeichnet, in der der Stickstoff vorgewärmt werden kann. Im Ausführungsbeispiel sind Autoabgaskatalysatoren auf Platin-oder Palladiumbasis verwendet. Diese Katalysatoren bewirken eine optimale Spaltung z.B. des Methanols im Temperaturbereich zwischen 573 K (300°C) und ca. 613 K (340°C). Daher wird der am weitesten im Ofen befindliche Katalysator 1a so positioniert, daß dessen Temperatur etwa bei 600 K (327°C), maximal 613 K, liegt. Über das Thermoelement 18 wird diese Temperatur überwacht. Den beiden Autoabgaskatalysatoren 1a und 1b werden dabei zunächst konstante Mengen von vorverdampftem Methanol und Stickstoff zugeführt. Das Gemisch aus Methanol und Stickstoff soll nach Möglichkeit ebenfalls eine Temperatur von ca. 600 K (327°C) besitzen, spätestens jedoch beim Durchströmen des Autoabgaskatalysators 1a vollständig diese Temeratur angenommen haben. Das Temperaturniveau des Katalysators von ca. 600 K wird nun durch
Vor- oder Zurückziehen der Zufuhrleitung 15 und damit der Autoabgaskatalysatoren 1a und 1b im Gegenflansch 4 gehalten. Ferner:
- Durch Veränderung des Stickstoffanteiles am Methanoldampfstrom.
- Durch Überhitzung des Methanoldampfes.
- Durch Vorwärmung des Stickstoffstromes über Wärmetauscher 12, der beispielsweise durch das Abgas eines Ofens beheizt werden kann.
- Durch Regelung der Temperatur benachbarter Strahlrohre.
- Durch Kühlung mittels Stickstoffzuleitung in den Rinraum 22 über Leitung 2.

Eine weitere bevorzugte Ausführungsform der Erfindung ist in Figur 2 dargestellt. Über eine die Ofenwand 16 durchsetzende Leitung 20 wird aus dem Ofeninnenraum 13 heißes Gas abgezogen Dazu dient ein Injektor 7, dem über eine Leitung 21 mit einem Regulierventil 8 kalter, gasförmiger Stickstoff als Saugstrom zugeführt wird. Durch diesen Stickstoffstrom wird Gas aus dem Ofen angesaugt und über ein Wellrohr 9 der Zuluhrleitung 15 zugeführt. Das Verhältnis der Stickstoffmenge zur Abgasmenge beträgt etwa 1 : 4. In die Zufuhrleitung 15 mündet eine weitere Leitung 6 für ein Stickstoff-Methanol-Gemisch. Leitung 6 und Leitung 15 sind koaxial zueinander angeordnet, so daß Leitung 15 die Leitung 6 mit Abstand umgibt.

In diesem Ausführungsbeispiels kann flüssiges oder vorverdampftes Methanol mit Stickstoff über Leitung 6 in Leitung 15 eingedüst werden. Der vorderste Autoabgaskatalysator 1a ist wie im vorhergehenden Ausführungsbeispiel so positioniert, daß er ohne Begasung auf 573 bis 613 K(300 bis 340°C) aufgeheizt wird. Das Gemisch aus Stickstoff, Ofenabgas und Methanol wird über einen z.B. mit Stahlwolle 5 gefüllten Raum geleitet, in dem Methanol vollständig verdampft. Über das Thermoelement 18 und die Regeleinheit 10 wird die Stellung des Regulierventils 8 in der Zuleitung 21 des Stickstoffs in die Ofenabzugsleitung 20 und damit die Stickstoffzufur zum Injektor 7 so geregelt, daß das Gemisch aus Ofenabgas, Stickstoff und Methanol mit ca. 573 K bis 613 K (300 bis 340°C) in den Autoabgaskatalysator 1b eintritt.

## Patentansprüche

1. Verfahren zur Herstellung einer Wasserstoff, Kohlenmonoxid und gegebenenfalls Stickstoff enthaltenden Atmosphäre oder auch einer Atmosphäre, die nur Stickstoff und Wasserstoff enthält,
wobei die Atmosphäre durch katalytische Spaltung eines Einsatzfluids durch Kontakt mit einem Katalysator erzeugt wird und das gebildete Atmosphärengas einem Einsatzraum zugeführt wird, der sich auf einer geeigneten Temperatur zur Behandlung von Einsatzgut befindet,
wobei der Katalysator in wärmeleitendem Kontakt mit der Atmosphäre im Einsatzraum steht,
wobei als Katalysator ein Edelmetallkatalysator, d.h. ein Katalysator mit Edelmetall als Katalysatorsubstanz, verwendet wird und dessen Temperatur geeignet eingestellt wird, und
wobei das Einsatzfluid vor dem Eintritt in den Katalysator auf eine Temperatur erhitzt wird, die in dem Temperaturbereich liegt, innerhalb dessen der Katalysator gehalten wird,
**dadurch gekennzeichnet,**
daß der die Wand des Einsatzraumes durchsetzende Katalysator durch Ändern der Position im Durchsetzungskanal auf seine Temperatur eingestellt wird.

2. Verfahren nach Anspruch 1, **dadurch gekennzeichnet,** daß die Temperatur des Katalysators in einem Temperaturbereich gehalten wird, in dem eine maximale Menge des Einsatzfluids in die jeweiligen Schutzgaskomponenten gespalten wird.

3. Verfahren nach einem der Ansprüche 1 bis 2, **dadurch gekennzeichnet,** daß der Katalysator ein Autoabgaskatalysator ist.

4. Verfahren nach einem der Ansprüche 1 bis 3, dadurch gekennzeichnet, daß dem Einsatzfluid ein Inertgas, insbesondere Stickstoff zugemischt wird.

5. Verfahren nach Anspruch 4, dadurch gekennzeichnet, daß das Inertgas vor dem Vermischen erwärmt wird.

6. Verfahren nach einem der Ansprüche 4 oder 5, dadurch gekennzeichnet, daß das Inertgas in indirektem Wärmetausch mit dem Abgas eines Einsatzraumes erwärmt wird.

7. Verfahren nach einem der Ansprüchen 4 bis 6, dadurch gekennzeichnet, daß das Einsatzfluid und/oder das Inertgas auf eine Temperatur erhitzt wird bzw. werden, bei welcher die Temperatur des Gemisches aus Inertgas und Einsatzfluid in dem Temperaturbereich liegt, innerhalb dessen der Katalysator gehalten wird.

8. Verfahren nach einem der Ansprüche 1 bis 7, dadurch gekennzeichnet, daß aus dem Einsatzraum heißes Gas entnommen, mit dem Einsatzfluid vermischt und das Gemisch über den Katalysator in den Einsatzraum geleitet wird.

9. Verfahren nach Anspruch 8, dadurch gekennzeichnet, daß das heiße Gas mittels eines Stickstoffstromes über einen Injektor aus dem Einsatzraum abgezogen wird.

10. Verfahren nach einem der Ansprüche 1 bis 9, dadurch gekennzeichnet daß die Temperatur des Katalysators gemessen und diese anhand eines Vergleichs des Meßwertes mit einem angestrebten Sollwert durch eine der folgenden Maßnahmen im Sinn einer Angleichung des Meßwertes an den Sollwert geändert wird:
a) Durch Ändern der Wärmezufuhr zum Einsatzfluid
b) Durch Ändern der Wärmezufuhr zum Inertgas
c) Durch Ändern des dem Einsatzfluid zugemischten Inertgasanteils
d) Bei einem mittels Strahlrohren erhitzen Einsatzraum durch Regelung der Temperatur von dem Katalysator benachbarten Strahlrohren
e) durch Einleiten eines Inertgases, insbesondere von Stickstoff, in den Raum zwischen Katalysatorgehäuse und Kanalwand.

11. Verfahren nach Anspruch 10, dadurch gekennzeichnet, daß die Temperatur des Katalysators automatisch geregelt wird.

12. Verfahren nach einem der Ansprüche 1 bis 11, dadurch gekennzeichnet, daß das Einsatzfluid eine organische Flüssigkeit, die katalytisch nahezu vollständig in Kohlenmonoxid und Wasserstoff spaltbar ist, ist.

13. Verfahren nach Anspruch 12, dadurch gekennzeichnet, daß das Einsatzfluid ein Alkohol, insbesondere Methanol ist.

14. Verfahren nach einem der Ansprüche 12 oder 13, dadurch gekennzeichnet, daß die organische Flüssigkeit vor dem Einleiten in den Katalysator verdampft und gegebenenfalls überhitzt wird.

15. Verfahren nach einem der Ansprüche 12 bis 14, dadurch gekennzeichnet, daß der Katalysator in einem Temperaturbereich zwischen 573 und 613 K (300 bis 340°C) gehalten wird.

16. Verfahren nach einem der Ansprüche 12 bis 14, mit einem Edelmetallkatalysator, dadurch gekennzeichnet, daß der organischen Flüssigkeit Wasser zugesetzt wird und der Katalysator in einem Temperaturbereich zwischen 623 K (350°C) und 1123 K (850°C) gehalten wird.

17. Verfahren nach einem der Ansprüche 12 bis 14, wobei der organischen Flüssigkeit Stickstoff zugemischt wird, dadurch gekennzeichnet, daß das Verhältnis der Flüssigkeitsmenge zur Stickstoffmenge so gewählt wird, daß sich im Einsatzraum ein Kohlenmonoxidgehalt zwischen 1 Vol% und 30 Vol.% einstellt.

18. Verfahren nach einem der Ansprüche 1 bis 11, dadurch gekennzeichnet, daß das Einsatzfluid Ammoniak ist.

19. Verfahren nach einem der Ansprüche 1 bis 11, dadurch gekennzeichnet, daß das Einsatzfluid ein Gemisch aus Erdgas und Luft ist.

20. Verfahren nach einem der Ansprüche 1 bis 19, dadurch gekennzeichnet, daß der Katalysator zusätzlich mittels abgefackeltem Abgas aus einem anderen Einsatzraum beheizt wird.

21. Wärmebehandlungseinrichtung zur Durchführung des Verfahrens nach einem der Ansprüche 1 bis 20, mit einem Einsatzraum und mit einem mit edelmetallischer Katalysatormasse gefüllten, aus wärmeleitendem Material bestehenden Behälter (1), der innerhalb des Einsatzraumes angeordnet ist,
wobei der Behälter (1) wenigstens eine in den Einsatzraum (13) mündende Öffnung (14) besitzt und in den Behälter (1) eine Zufuhrleitung (15) für das Einsatzfluid mündet,
**dadurch gekennzeichnet,**
daß der Behälter (1) im wesentlichen innerhalb eines die Wand (16) des Einsatzraumes (13) durchsetzenden Kanals (17) mit Abstand zur Kanalwand angeordnet ist und daß Mittel vorgesehen sind, die ein Vor- und Zurückziehen im Kanal ermöglichen.

22. Einrichtung nach Anspruch 21, **dadurch gekennzeichnet,** daß der mit der Katalysatormasse gefüllte Behälter (1) ein Autoabgaskatalysator ist, wobei gegebenenfalls zwei oder mehrere Autoabgaskatalysatoren in Serie geschaltet sind.

23. Einrichtung nach Anspruch 21 bis 22, **dadurch gekennzeichnet,** daß innerhalb des Behälters (1) ein Temperaturmeßfühler (18) im Bereich des in den Einsatzraum (13) weisenden Endes des Behälters (1) angeordnet ist.

24. Einrichtung nach Anspruch 22 bis 24, **dadurch gekennzeichnet,** daß in den zwischen Kanalwand und Behälter gebildeten Raum (22) eine Leitung (2) für die Zufuhr eines Kühlfluids von außerhalb des Einsatzraumes mündet.

## Claims

1. A process for the production of an atmosphere containing hydrogen, carbon monoxide and possibly nitrogen or also an atmosphere which contains only nitrogen and hydrogen, wherein the atmosphere is produced by the catalytic cracking of a feed fluid by contact with a catalyst, and the formed atmosphere gas is conducted to a feed chamber which is at a suitable temperature for the treatment of feed stock,
wherein the catalyst is in thermally conductive contact with the atmosphere in the feed chamber,
and wherein
a noble metal catalyst, i.e. a catalyst containing noble metal as catalytic substance, is used as catalyst and its temperature is suitably adjusted,
and wherein the feed fluid is heated prior to the entry into the catalyst to a temperature which falls within the temperature range in which the catalyst is maintained,
characterised in that the temperature of the catalyst arranged in a channel passing through the wall of the feed chamber, is adjusted by changing the position of the catalyst inside the channel.

2. A process as claimed in Claim 1, characterised in that the temperature of the catalyst is maintained within a temperature range in which a maximum quantity of the feed fluid is cracked into the respective protective gas components.

3. A process as claimed in one of Claims 1 to 2, characterised in that the catalyst is a car exhaust gas catalyst.

4. A process as claimed in one of Claims 1 to 3, characterised in that an inert gas, in particular nitrogen, is mixed with the feed fluid.

5. A process as claimed in Claim 4, characterised in that the inert gas is heated prior to the mixing.

6. A process as claimed in one of Claims 4 or 5, characterised in that the inert gas is heated in indirect heat exchange with the exhaust gas of a feed chamber.

7. A process as claimed in one of Claims 4 to 6, characterised in that the feed fluid and/or the inert gas is/are heated to a temperature at which the temperature of the mixture of inert gas and feed fluid falls within the temperature range in which the catalyst is maintained.

8. A process as claimed in one of Claims 1 to 7, characterised in that hot gas is withdrawn from the feed chamber, is mixed with the feed fluid, and the mixture is conducted via the catalyst into the feed chamber.

9. A process as claimed in Claim 8, characterised in that the hot gas is discharged from the feed chamber via an injector by means of a nitrogen stream.

10. A process as claimed in one of Claims 1 to 9, characterised in that the temperature of the catalyst is measured and, by comparing the measured value with a desired theoretical value, is changed by one of the following measures in order to adjust the measured value to the theoretical value:
a) By changing the heat supply to the feed fluid.
b) By changing the heat supply to the inert gas.
c) By changing the inert gas constituent admixed with the feed fluid.
d) In the case of a feed chamber heated by radiant tubes, by regulating the temperature of radiant tubes adjacent to the catalyst.
e) In the case of a catalyst arranged in accordance with measure e), by introducing an inert gas, in particular nitrogen, into the space between the catalyst housing and the channel wall.

11. A process as claimed in Claim 10, characterised in that the temperature of the catalyst is automatically controlled.

12. A process as claimed in one of Claims 1 to 11, characterised in that the feed fluid is an organic liquid which can be virtually completely catalytically cracked into carbon monoxide and hydrogen.

13. A process as claimed in Claim 12, characterised in that the feed fluid is an alcohol, in particular methanol.

14. A process as claimed in one of Claims 12 or 13, characterised in that before it enters the catalyst the organic liquid is vaporized and possibly superheated.

15. A process as claimed in one of Claims 12 to 14, characterised in that the catalyst is maintained in a temperature range between 573 K and 613 K (300 to 340°C).

16. A process as claimed in one of Claims 12 to 14, comprising a noble metal catalyst, characterised in that water is added to the organic liquid, and the catalyst is maintained in a temperature range of between 623 K (350°C) and 1123 K (850°C).

17. A process as claimed in one of Claims 12 to 14, wherein nitrogen is admixed with the organic liquid, characterised in that the ratio of the quantity of liquid to the quantity of nitrogen is selected to be such that a carbon monoxide content of between 1 vol.% and 30 vol.% is obtained in the feed chamber.

18. A process as claimed in one of Claims 1 to 11, characterised in that the feed fluid is ammonia.

19. A process as claimed in one of Claims 1 to 11, characterised in that the feed fluid is a mixture of natural gas and air.

20. A process as claimed in one of Claims 1 to 19, characterised in that the catalyst is additionally heated by means of burned-off exhaust gas from another feed chamber.

21. A thermal treatment device for the implementation of the process claimed in one of Claims 1 to 20 comprising a feed chamber a container (1) which is filled with a noble metal catalytic mass, is composed of thermally conductive material, and is arranged inside the feed chamber, wherein the container (11) contains at least one opening (14) which leads into the feed chamber (13) and wherein a supply line (15) for the feed fluid leads into the container (1), characterised in that
the container (1) is substantially arranged inside a channel (17) passing through the wall (16) of the feed chamber (13), at a distance from the channel wall, and that there are means for moving forward and backward in the channel.

22. A device as claimed in one of Claims 22 or 23, characterised in that the container (1) filled with catalytic mass is a car exhaust gas catalyst, where possibly two or more exhaust gas catalysts are connected in series.

23. A device as claimed in one of Claims 21 to 22 characterised in that inside the container (1) a temperature sensor (18) is arranged in the region of that end of the container (1) directed towards the feed chamber (13).

24. A device as claimed in one of Claims 21 to 23, characterised in that a line (2) for the supply of a cooling fluid from outside the feed chamber leads into the space (22) formed between the channel wall and the container.

## Revendications

1. Procédé pour produire une atmosphère contenant de l'hydrogène, du monoxyde de carbone et, le cas échéant, de l'azote, ou même une atmosphère qui ne contient que de l'azote et de l'hydrogène, procédé dans lequel l'atmosphère est produite par craquage catalytique d'un fluide à traiter, par contact avec un catalyseur, et le gaz d'atmosphère formé alimente une enceinte de traitement, qui se trouve à une température appropriée, en vue du traitement du produit,
et où le catalyseur est en contact de conduction calorifique avec l'atmosphère régnant dans l'enceinte de traitement,
et où l'on utilise comme catalyseur un catalyseur à métal noble, c'est-à-dire un catalyseur avec un métal noble servant de substance de catalyseur, et dont la température est réglée de manière appropriée,
et où le fluide à traiter est chauffé avant l'entrée dans le catalyseur à une température située dans une plage de température à l'intérieur de laquelle le catalyseur est maintenu,
caractérisé en ce que la temperature du catalyseur, qui disposé à l'intérieur d'un canal traversant la paroi de l'enceinte de traitement, est ajusté par modification de la position du catalyseur à l'intérieur du canal.

2. Procédé selon la revendication 1, caractérisé en ce que la température est maintenue dans une plage de température dans laquelle une quantité maximale du fluide à traiter est craquée en donnant les différents composants du gaz de protection.

3. Procédé selon l'une des revendications 1 à 2, caractérisé en ce que le catalyseur est un catalyseur de gaz d'échappement d'automobile.

4. Procédé selon l'une des revendications 1 à 3, caractérisé en ce que l'on ajoute au fluide à traiter un gaz inerte, en particulier de l'azote.

5. Procédé selon la revendication 4, caractérisé en ce que le gaz inerte est chauffé avant mélange.

6. Procédé selon l'une des revendications 4 ou 5, caractérisé en ce que le gaz inerte est chauffé dans un échange de chaleur indirect, avec le gaz d'échappement d'une enceinte de traitement.

7. Procédé selon l'une des revendications 4 à 6, caractérisé en ce que le fluide à traiter et/ou le gaz inerte est ou sont chauffé(s) à une température à laquelle la température du mélange fait de gaz inerte et de fluide à traiter est située dans une plage de température, à l'intérieur de laquelle le catalyseur est maintenu.

8. Procédé selon l'une des revendications 1 à 7, caractérisé en ce que le gaz chaud prélevé dans l'enceinte de traitement est mélangé au fluide à traiter et le mélange est passé sur le catalyseur, dans l'enceinte de traitement.

9. Procédé selon la revendication 8, caractérisé en ce que le gaz chaud est extrait de l'enceinte de traitement au moyen d'un courant d'azote, par l'intermédiaire d'un injecteur.

10. Procédé selon l'une des revendications 1 à 9, caractérisé en ce que la température du catalyseur est mesurée et modifiée, à l'aide d'une comparaison entre la valeur mesurée et la valeur de consigne recherchée, au sens d'une égalisation entre la valeur de mesure et la valeur de consigne, par l'une des mesures suivantes:
a) modification de l'apport de chaleur au fluide à traiter;
b) modification de l'apport de chaleur au gaz inerte;
c) modification de la proportion de gaz inerte ajouté par mélange au fluide à traiter;
d) réglage de la température des tubes radiants voisins du catalyseur, dans le cas d'une enceinte de traitement chauffée au moyen de tubes en acier;
e) introduction d'un gaz inerte, en particulier d'azote, dans l'espace situé entre le carter de catalyseur et la paroi du canal, dans le cas d'un catalyseur disposé suivant la mesure e).

11. Procédé selon la revendication 10, caractérise en ce que la température du catalyseur est réglée automatiquement.

12. Procédé selon l'une des revendications 1 à 11, caractérisé en ce que le fluide à traiter est un liquide organique, qui est craquable à peu près en totalité par voie catalytique, pour donner du monoxyde de carbone et de l'hydrogène.

13. Procédé selon la revendication 12, caractérisé en ce que le fluide à traiter est un alcool, en particulier du méthanol.

14. Procédé selon l'une des revendications 12 ou 14, caractérisé en ce que le liquide organique est vaporisé avant introduction dans le catalyseur et éventuellement surchauffé.

15. Procédé selon l'une des revendications 12 à 14, caractérisé en ce que le catalyseur est maintenu dans une plage de température située entre 573 et 613°K (300 à 340°C).

16. Procédé selon l'une des revendications 12 à 14, avec un catalyseur à métal noble, caractérisé en ce que de l'eau est ajouté au liquide organique et que le catalyseur est maintenu dans une plage de température située entre 623°K (350°C) et 1123°K (850°C).

17. Procédé selon l'une des revendications 12 à 14, dans lequel de l'azote est ajouté par mélange au liquide organique, caractérisé en ce que le rapport entre la quantité de liquide et la quantité d'azote est choisi tel qu'une teneur en monoxyde de carbone comprise entre 1% et 30% en volume s'établit dans l'enceinte de traitement.

18. Procédé selon l'une des revendications 1 à 11, caractérisé en ce que le fluide à traiter est de l'ammoniaque.

19. Procédé selon l'une des revendications 1 à 11, caractérisé en ce que le fluide à traiter est un mélange composé de gaz naturel et d'air.

20. Procédé selon l'une des revendications 1 à 19, caractérisé en ce que le catalyseur est en plus chauffé au moyen d'un gaz d'échappement de torchère, provenant d'une autre enceinte de traitement.

21. Dispositif de traitement thermique pour la mise en oeuvre du procédé suivant l'une des revendications 1 à 20, avec une enceinte de traitement et un récipient (1), rempli d'une masse de catalyseur en métal noble,
composé en un matériau conducteur de la chaleur, disposé à l'intérieur de l'enceinte de traitement, le récipient (1) comportant au moins une ouverture (14), débouchant dans l'enceinte de traitement (13), et une conduite d'alimentation (15) pour le fluide à traiter débouchant dans le récipient (1), caractérisé en ce que
le récipient (1) est disposé essentiellement à l'intérieur d'un canal (17) qui traverse la paroi (16) de l'enceinte de traitement (13), à distance de la paroi de canal, et en ce que il y a moyen pour agiter le récipient dans le canal.

22. Dispositif selon l'une des revendications 21, caractérisé en ce que le récipient (1), rempli de la masse de catalyseur est un catalyseur de gaz d'échappement d'automobile, le cas échéant, deux ou plusieurs catalyseurs de gaz d'échappement d'automobile étant mis en circuit en série.

23. Dispositif selon l'une des revendications 21 à 22, caractérisé en ce qu'une sonde de température (18) est disposée à l'intérieur du récipient (1), dans la zone d'extrémité du récipient (1) qui est orientée vers l'enceinte de traitement (13).

24. Dispositif selon l'une des revendications 21 à 23, caractérisé en ce qu'une conduite (2), destinée à l'amenée d'un fluide de refroidissement depuis l'extérieur de l'enceinte de traitement, débouche dans l'espace (22) formé entre la paroi de canal et le récipient.
